# EUROPÄISCHE PATENTSCHRIFT

(11) **EP 1 265 333 B1**
(45) Veröffentlichungstag und Bekanntmachung des Hinweises auf die Patenterteilung: **18.08.2010**
(21) Anmeldenummer: 01113879.9
(22) Anmeldetag: 07.06.2001
(51) Int. Cl.: H02J 3/00

(54) **Konfiguration eines Teils eines elektrischen Energieverteilnetzes**
Configuration of one part of the electrical power distribution
Configuration d'une partie d'un systeme de distribution électrique

(43) Veröffentlichungstag der Anmeldung: 11.12.2002
(73) Patentinhaber: ABB Research Ltd., 8050 Zürich (CH)
(72) Erfinder: Rehtanz, Christian, 5405 Baden-Dättwil (CH); Westermann, Dirk, 8050 Zürich (CH); Bosshart, Peter, 5610 Wohlen (CH)
(74) Vertreter: ABB Patent Attorneys

(56) Entgegenhaltungen:
- EP-A- 0 803 964
- DE-A- 4 209 168
- ATANACKOVIC D ET AL: "AN INTEGRATED KNOWLEDGE-BASED MODEL FOR POWER-SYSTEM PLANNING" IEEE EXPERT, IEEE INC. NEW YORK, US, Bd. 12, Nr. 4, 1. Juli 1997 (1997-07-01), Seiten 65-71, XP000720771 ISSN: 0885-9000
- JINQIU SHAO ET AL: "AN EXPERT SYSTEM FOR SECONDARY DISTRIBUTION SYSTEM DESIGN" IEEE TRANSACTIONS ON POWER DELIVERY, IEEE INC. NEW YORK, US, Bd. 6, Nr. 4, 1. Oktober 1991 (1991-10-01), Seiten 1607-1615, XP000271660 ISSN: 0885-8977

## Beschreibung

### Technisches Gebiet

Die Erfindung bezieht sich auf das Gebiet der elektrischen Energieverteilung auf Mittel- oder Hochspannungsniveau. Sie bezieht sich auf ein Verfahren, ein Computerprogrammprodukt und ein System zur Konfiguration eines Teils eines elektrischen Energieverteilnetzes gemäss dem Oberbegriff der Patentansprüche 1,8 und 10.

### Stand der Technik

Bei einer Erweiterung oder Modernisierung eines elektrischen Energieübertragungs oder -verteilnetzes werden Teile eines solchen Netzes neu oder an Stelle von bestehenden Einrichtungen erstellt. Solche Teile eines Netzes sind beispielsweise Übertragungsleitungen, Schaltanlagen, Blindleistungskompensationseinrichtungen etc. Zur Planung wird eine umfangreiche Analyse durch einen Netzbetreiber und/oder einen Hersteller von Geräten und Anlagen durchgeführt. Ziel der Analyse ist es, eine Konfiguration von Geräten und/oder Anlagen zu bestimmen, welche in das Netz eingefügt werden kann und vorgegebenen technischen und wirtschaftlichen Anforderungen des Netzbetreibers genügt. Ein Resultat dieser Analyse ist eine bestimmte Konfiguration, das heisst eine geplante Anordnung von bestimmten Geräten des Herstellers. Bei der Bestimmung dieser Konfiguration stellt sich das Problem, dass einerseits der Netzbetreiber seine Anforderungen kennt und über Simulationssysteme verfügt, mit denen er verschiedene mögliche Konfigurationen testen und vergleichen kann. Dazu sind jedoch menschliche Experten erforderlich, die sowohl die Simulationssysteme kennen als auch umfassende Kenntnisse über eine Gerätepalette des Herstellers und über deren Konfigurationsmöglichkeiten verfügen. Andererseits verfügt der Hersteller über Wissen über seine Geräte, insbesondere über Simulationsmodelle. Er kann oder möchte diese aber nicht in vollem Umfang dem Netzbetreiber zur Verfügung stellen. Auch wenn diese dem Netzbetreiber zur Verfügung stehen, so ermittelt der Netzbetreiber doch oft technisch und kostenmässig suboptimale Konfigurationen, da er nur von ihm bekannten Lösungen ausgeht, ohne neue Produkte und deren neue Eigenschaften einzubeziehen, und da er nicht sämtliche Aspekte der Geräte und Gerätekombinationen überblicken und beurteilen kann.

DE 4209168 beschreibt ein Verfahren zum Verarbeitung von Parametern mittels eines durch vorgebbare Anlageninformationen automatisch erstellten Modells der Automatisierungseinrichtung.

### Darstellung der Erfindung

Es ist deshalb Aufgabe der Erfindung, ein Verfahren, ein Computerprogrammprodukt und ein system zum Konfigurieren eines Teils eines elektrischen Energieverteilnetzes der eingangs genannten Art zu schaffen, welche es ermöglichen, ausgehend von Anforderungen eines Netzbetreibers automatisch eine Konfiguration von Geräten zu ermitteln, welche die Anforderungen in optimaler Weise erfüllt.

Diese Aufgabe lösen ein Verfahren, ein Computerprogrammprodukt und ein System zur Konfiguration eines Teils eines elektrischen Energieverteilnetzes mit den Merkmalen der Patentansprüche 1,8 und 10.

In dem Verfahren wird also von einem Konfigurationsmodell ausgegangen, welches eine Gesamtheit von möglichen Konfigurationen von Geräten beschreibt, und werden gemäss der Erfindung anhand des Konfigurationsmodells systematisch alle möglichen Konfigurationen erzeugt, welche eine vorgegebene Menge von Anforderungen erfüllen, wobei jeder möglichen Konfiguration mindestens ein Kennwert zuordnungsbar ist, und es wird eine Lösungskonfiguration bestimmt, welche diesen Kennwert optimiert.

Dadurch wird es möglich, automatisch eine optimale Konfiguration zu erzeugen, ohne dass Expertenwissen über die in der Konfiguration verwendeten Geräte notwendig ist. Insbesondere wird es möglich, funktionale Anforderungen an eine Konfiguration zu spezifizieren, also Anforderungen an ein Betriebsverhalten der Konfiguration. Dies steht im Gegensatz zum herkömmlichen Entwurfsvorgehen, in welchem bestimmte Geräte und deren Zusammenschaltung vorgegeben werden, worauf diese Zusammenschaltung analysiert wird, um zu prüfen, ob sie bestimmten Anforderungen genügt.

In einer bevorzugten Ausführungsform der Erfindung wird ein Simulationsmodell zur Simulation eines technischen Verhaltens der Lösungskonfiguration automatisch erzeugt. Dadurch wird es möglich, eine oder mehrere Lösungskonfigurationen durch Simulation zu testen, ohne dass Expertenwissen über Eigenschaften und Simulationsmodelle der in einer Lösungskonfiguration verwendeten Geräte benötigt wird.

In einer bevorzugten Ausführungsform der Erfindung weist die Menge von Anforderungen Vorgaben an die Lösungskonfiguration auf. Dadurch wird es möglich, die Suche auf gewünschte Lösungsvarianten einzuschränken, respektive Konfigurationen, an denen kein Interesse besteht, von vorneherein auszuschliessen.

In einer weiteren bevorzugten Ausführungsform der Erfindung repräsentiert der vorgegebene und zu optimierende Parameter neben elektrotechnischen Grössen beispielsweise Kosten einer Konfiguration, Platzbedarf einer Konfiguration, Zuverlässigkeit einer Konfiguration, Risiko einer Konfiguration, Wirkungsgrad einer Konfiguration, oder Unterhaltskosten einer Konfiguration.

Das Computerprogrammprodukt zur Konfiguration eines Teils eines elektrischen Energieverteilnetzes gemäss der Erfindung ist in einen internen Speicher einer digitalen Datenverarbeitungseinheit ladbar und weist Computerprogrammcodemittel auf, welche, wenn sie in einer digitalen Datenverarbeitungseinheit ausgeführt werden, diese zur Ausführung des erfindungsgemässen Verfahrens bringen. In einer bevorzugten Ausführungsform der Erfindung weist das Computerprogrammprodukt ein computerlesbares Medium auf, auf welchem die Computerprogrammcodemittel gespeichert sind.

Weitere bevorzugte Ausführungsformen gehen aus den abhängigen Patentansprüchen hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen:
- Figur 1: Eine graphische Darstellung zum Vergleich von verschiedenen Schaltanlagen entsprechend unterschiedlichen Anforderungen;
- Figur 2: schematisch eine Softwarestruktur eines Systems zur Durchführung des erfindungsgemässen Verfahrens;
- Figur 3: ein Flussdiagramm des erfindungsgemässen Verfahrens;
- Figur 4: eine graphische Darstellung eines vereinfachten Konfigurationsmodells einer Schaltanlage;
- Figur 5: eine graphische Darstellung eines detaillierten Konfigurationsmodells einer Schaltanlage; und
- Figur 6: einen Suchbaum zur Erzeugung von Konfigurationen anhand des Konfigurationsmodells aus Figur 5.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

Erfindungsgemäss wird ein Teil eines Energieübertragungs- oder Energieverteilnetzes als eine Netzfunktion oder "Power-System"-Funktion betrachtet, welche dieser Teil ausführt. So erfüllt beispielsweise ein Teil eines Netzwerkes, der aus einer Hochspannungsleitung zusammen mit zugeordneten Schutz- und Kompensationseinrichtungen besteht, eine Netzfunktion "Energie übertragen" oder, genauer spezifiziert, eine Netzfunktion "Punkt zu Punkt-Verbindung" oder "Mehrpunkt-Verbindung". Umgekehrt kann die Netzfunktion "Energie übertragen" in verschiedener Weise realisiert werden, beispielsweise durch eine Wechsel- oder Gleichstromverbindung sowie mit unterschiedlichen Spannungsniveaus, durch eine Freileitung oder ein Kabel. Eine Netzfunktion "Verbindungen schalten" ist durch eine Schaltanlage mit unterschiedlicher Anzahl Sammelschienen realisierbar. Eine Netzfunktion "Blindleistung kompensieren" ist beispielsweise mittels Kapazitäten, Induktivitäten oder "Static Var Compensator" realisierbar. Eine Netzfunktion "Stromregelung" ist durch Umrichter unterschiedlicher Topologie an unterschiedlichen Stellen des zu konfigurierenden Teils des Netzes und mit unterschiedlichen Halbleiterbauelementen wie Thyristoren, IGBT, GTO, IGCT realisierbar. Ebenso sind Netzfunktionen "Spannung transformieren", "Leistungsfluss steuern" oder "Strom begrenzen" jeweils durch mehrere verschiedene Geräte oder Gerätekombinationen realisierbar.

Mit dem Begriff "Geräte" werden im Folgenden leistungsführende Primärgeräte oder Anordnungen von Primärgeräten wie Leitungen, Schalter, Sammelschienen, Schaltfelder, Transformatoren, Umrichter, FACTS(Flexible AC Transmission System)-Geräte, Kompensationselemente bezeichnet. Darin inbegriffen sind zugeordnete Sekundärgeräte oder Leittechnikgeräte, welche die Primärgeräte steuern, regeln und schützen.

Somit ist eine vorgegebene Netzfunktion durch in der Regel mehrere Anordnungen oder Konfigurationen von Geräten realisierbar. Unterschiedliche Konfigurationen weisen unterschiedliche Leitungstopologien und unterschiedliche Geräte auf. Sie unterscheiden sich neben den elektrotechnischen Kennwerten ferner durch Kennwerte wie beispielsweise Anschaffungspreis, Betriebs- und Unterhaltskosten, Platzbedarf, Zuverlässigkeit respektive Fehlerhäufigkeit. Kennwerte können auch Risiken bezüglich Lieferbarkeit, Preisstabilität oder Funktionstauglichkeit repräsentieren.

Einem Betreiber oder Besitzer eines elektrischen Energieverteilnetzes stellt sich bei beispielsweise einem Kapazitätsausbau seines Netzes oder bei einem Ersatz bestehender Teile seines Netzes die Frage nach einer Konfiguration von Geräten, welche seine Anforderungen in optimaler Weise erfüllen. Je nach Art einer zu realisierenden Netzfunktion sind gewisse technische Anforderungen fix vorgegeben, andere Anforderungen an Kennwerte wie beispielsweise Preis, Zuverlässigkeit und Raumbedarf werden gegeneinander abgewogen. Um eine optimale Konfiguration zu ermitteln oder um mehrere nach unterschiedlichen Kriterien optimierte Konfigurationen miteinander zu vergleichen, werden gemäss dem Stand der Technik Experten benötigt, die sowohl die verwendbaren Geräte und ihre Eigenschaften kennen, als auch über Simulationsmodelle der einzelnen Geräte und Simulationswerkzeuge verfügen, mit welchen sich das technische Verhalten unterschiedlicher Konfigurationen nachbilden und vergleichen lässt. Dabei ist problematisch, dass Experten teuer sind, dem Netzbetreiber nicht immer Simulationsmodelle zur Verfügung stehen, und dass eine Palette von Geräten sich dauernd ändert.

Erfindungsgemäss wird die Konfiguration und vorzugsweise auch die Erzeugung von Simulationsmodellen einer Konfiguration automatisiert, indem ein Konfigurationsmodell verwendet wird, welches alle möglichen Konfigurationen von Geräten mittels einer formalen Sprache beschreibt. Anhand des Konfigurationsmodells sind alle möglichen Konfigurationen systematisch erzeugbar. Aufgrund einer Menge von Anforderungen, die ein Benutzer vorgibt, wird eine Menge aller Konfigurationen erzeugt, die diese Anforderungen erfüllen. Zu jeder Konfiguration werden die Kennwerte bestimmt.

Ein Konfigurationsmodell und die systematische Erzeugung von Konfigurationen wird weiter unten detailliert beschrieben. Die Menge von Anforderungen umfasst eine minimale Menge von Anforderungen, sowie weitere oder optionale Anforderungen. Die minimale Menge von Anforderungen muss bei einer bestimmten Netzfunktion in jedem Fall spezifiziert sein.

Beispielsweise müssen für die Netzfunktion "Verbindungen schalten"eine Nennspannung U, eine Anzahl Leitungsabgänge nel und eine Anzahl Transformatorabgänge nct zwingend vorgegeben sein. Optionale Anforderungen sind eine Anzahl nib von Buskopplern und eine Angabe eines Anlagentyps arr wie beispielsweise "Einzelsammelschiene", " Einzelsammelschiene mit Umgehung", "Doppelsammelschiene", "Ringkonfiguration", "1 ½ Leistungsschalter".

Es ist möglich, dass keine Konfiguration existiert, welche alle Anforderungen der ersten und zweiten Menge erfüllt. In diesem Fall wird eine entsprechende Meldung, beispielsweise an den Benutzer, erzeugt oder ein Ausgabeparameter entsprechend gesetzt.

In einer bevorzugten Variante der Erfindung wird von allen erzeugten Konfigurationen eine optimale Konfiguration bestimmt, welche einen vorgegebenen Kennwert optimiert, das heisst, maximiert oder minimiert. Beispielsweise wird ein Preis oder Platzbedarf minimiert oder eine Zuverlässigkeit maximiert.

Programmiertechnisch wird eine Realisierung der Erfindung als Softwarefunktion oder Programmfunktion zugänglich gemacht, mit einer Struktur gemäss dem Ausdruck
x=BBType(P1 ...Pn, OP1...OPk, OPopt)
wobei BBType eine Netzfunktion bezeichnet, P1 ... Pn Parameter sind, die minimale Menge von Anforderungen repräsentieren, OP1 ... Opk weitere k optionale Parameter zur Repräsentation der optionalen Anforderungen bezeichnen. Ein optionaler Parameter OPopt spezifiziert, bezüglich welchen Kennwertes anstelle des Anschaffungspreises optimiert werden soll. Ein Ausgangswert x ist ein Vektor, dessen verschiedene Elemente beispielsweise sind:
- x[1]: Kennwert Existenz einer Lösung
- x[2]: Kennwert "Anschaffungspreis" der optimalen Lösung
- x[3]: Kennwert "Betriebskosten " der optimalen Lösung
- x[4]: Kennwert "Zuverlässigkeit " der optimalen Lösung
- x[5]: Kennwert "Wirkungsgrad " der optimalen Lösung
- x[6]: Kennwert "Raumbedarf" der optimalen Lösung
- x[7]: Diagramm der optimalen Lösung
- x[8]: Erläuterung zur optimalen Lösung
- x[9]: Beschreibung der optimalen Konfiguration.

Das Diagramm und die Beschreibung der optimalen Konfiguration werden durch Datenstrukturen oder Softwareobjekte dargestellt, welche durch eine Benutzerschnittstelle 1 respektive einen Modellgenerator 3 verarbeitbar sind.

In einer bevorzugten Ausführungsform der Erfindung wird ein weiterer Kennwert als gewichtete Summe anderer Kennwerte definiert.

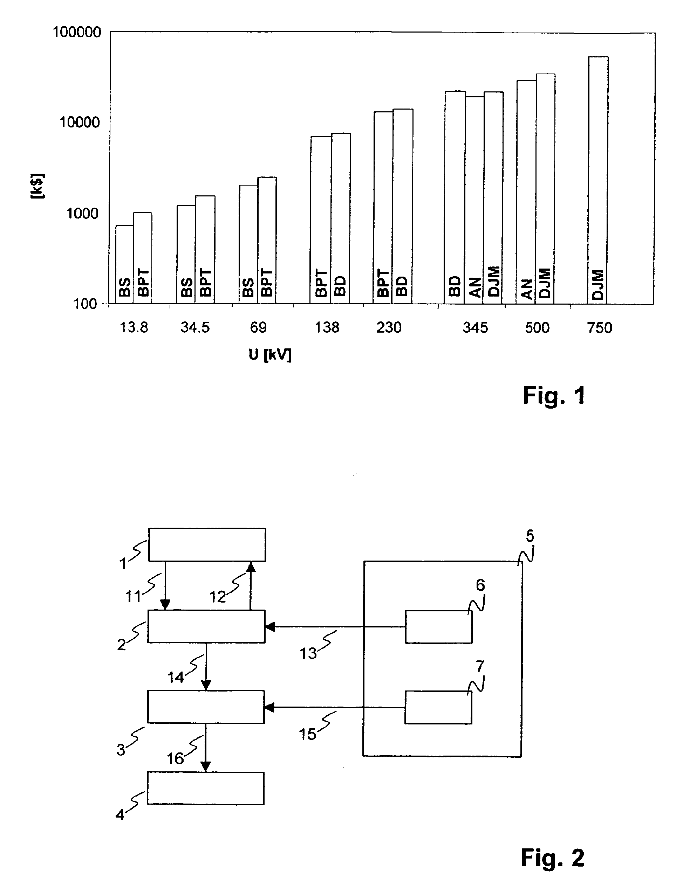

Figur 1 zeigt Resultate von mehreren Ausführungen des erfindungsgemässen Verfahrens zur Bestimmung von Konfigurationen zum Erfüllung der Funktion "Verbindungen schalten". Dies entspricht mehreren Aufrufen einer Programmfunktion der Art
Cost = Switchgear(U, nel, nct, arr, nib)
wobei nel=8, nct=0, nib=0 sind und die verbleibenden Parameter U und arr variiert werden. Für unterschiedliche entlang einer horizontalen Achse aufgetragene Nennspannungen ist jeweils eine kostengünstigste Variante einer Schaltanlage aufgetragen, wobei eine Höhe eines Balkens einem Anschaffungspreis der Schaltanlage eines bestimmten Typs entspricht. Dazu sind für jede Nennspannung eine oder zwei weitere Varianten aufgetragen, deren Anlagentyp als weitere Anforderung in der zweiten Menge von Anforderungen vorgegeben wurde. Die Varianten entsprechend dem optionalen Parameter arr sind
- BS: Einzelsammelschiene,
- BPT: Einzelsammelschiene mit Umgehung,
- BD: Doppelsammelschiene,
- AN: Ringkonfiguration,
- DJM: 1 ½ Leistungsschalter.

Eine solche Programmfunktion bestimmt also anhand von funktionalen Anforderungen, wie sie durch die minimale Menge von Anforderungen ausgedrückt sind, eine Lösungskonfiguration, also eine technische Realisierung, welche die entsprechende Netzfunktion in optimaler Weise realisiert.

Figur 2 zeigt schematisch eine Softwarestruktur eines Systems zur Durchführung des erfindungsgemässen Verfahrens. Das System weist eine Benutzerschnittstelle 1 zur Eingabe von Anforderungen und zur Darstellung von generierten Konfigurationen auf, sowie einen Konfigurator 2 zur Ermittlung einer Konfiguration von Geräten, welche den Anforderungen genügt und ein vorgegebenes Optimierungskriterium optimiert. Das System weist Mittel zur Übermittlung 11 von Anforderungen von der Benutzerschnittstelle 1 an den Konfigurator 2 und zur Übermittlung 12 von optimalen Konfigurationen und dazugehörigen optimierten Kennwerten an die Benutzerschnittstelle 1 auf. Das System weist weiter einen Modellgenerator 3 zur Erzeugung eines Simulationsmodells aus einer Konfiguration auf, Mittel zur Übermittlung 14 einer optimalen Konfiguration vom Konfigurator 2 an den Modellgenerator 3, einen Simulator 4, Mittel zur Übermittlung 16 von Simulationsmodellen von einer Netzfunktion vom Modellgenerator 3 an den Simulator 4 auf. Ferner weist das System eine Modelldatenbank 5 auf, welche selber wiederum eine Sammlung von Konfigurationsmodellen 6 für unterschiedliche Netzfunktionen und eine Sammlung von Simulationsmodellen 7 von Geräten aufweist. Das System weist Mittel zur Übermittlung 13 eines Konfigurationsmodells von der Sammlung von Konfigurationsmodellen 6 an den Konfigurator 2 sowie Mittel zur Übermittlung 15 von Simulationsmodellen von Geräten von der Sammlung von Simulationsmodellen 7 and den Modellgenerator 3 auf.

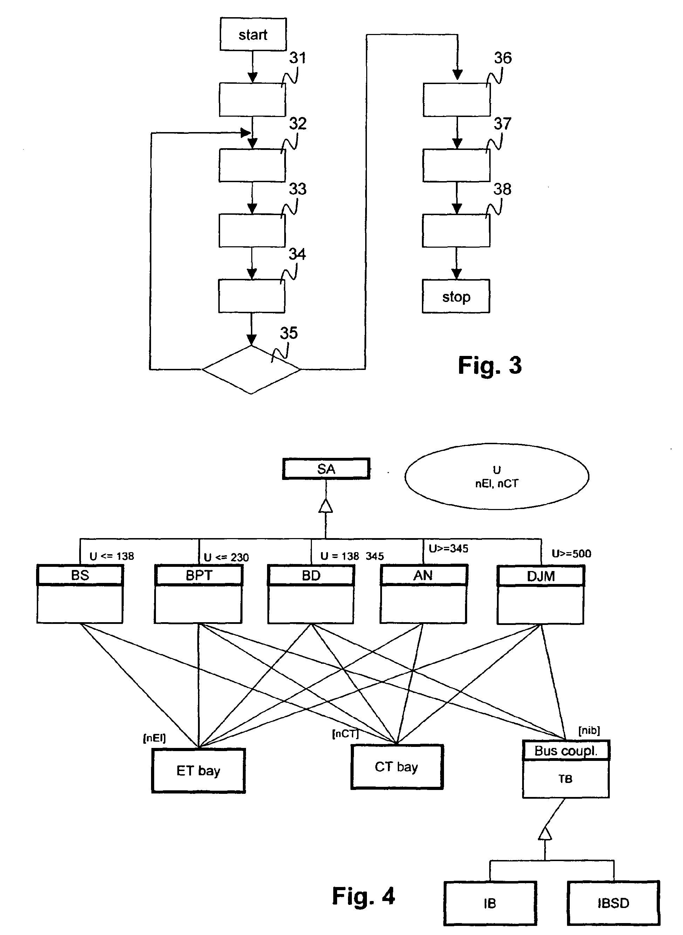

Figur 3 zeigt ein Flussdiagramm einer Anwendung eines erfindungsgemässen Verfahrens. Nach einem Start des Verfahrens wird in Schritt 31 nach Massgabe einer Benutzereingabe ein Konfigurationsmodell ausgewählt. In Schritt 32 werden dem Benutzer die minimalen und optionalen Parameter des Konfigurationsmodells dargestellt und nimmt der Benutzer eine Vorgabe zumindest der minimalen Parameter vor. In Schritt 33 werden nach Massgabe der minimalen und von eventuell spezifizierten optionalen Parametern alle entsprechenden Konfigurationen erzeugt. Dabei werden Analysemodelle zur Bestimmung von Kennwerten durchgerechnet und wird die optimale Konfiguration ermittelt. In Schritt 34 wird die optimale Konfiguration dem Benutzer in geeigneter Weise zusammen mit ihren Kennwerten dargestellt. Die Darstellung geschieht beispielsweise durch eine textuelle Auflistung der Geräte der Lösungskonfiguration oder durch eine graphische Darstellung, ausgehend vom Konfigurationsmodell, in welcher nur die Komponenten und Geräte der Lösungskonfiguration wiedergegeben sind, und Parameter wie beispielsweise die Kardinalität von Beziehungen durch konkrete Werte ersetzt sind.

Die Lösungskonfiguration wird zusammen mit den Parametern, die zu ihr geführt haben, in einem Katalog von Lösungen abgespeichert. In Schritt 35 wird nach Massgabe einer Benutzereingabe entweder mit Schritt 32 weitergefahren und mit anderen Parameterwerten eine weitere Lösungskonfiguration erzeugt, oder es wird in Schritt 36 eine Übersicht über den Katalog von Lösungen gegeben. Eine solche vergleichende Übersicht in graphischer Form ist beispielhaft in Figur 1 dargestellt. Beispielsweise entsprechen die drei Balken bei einem Wert U=345 kV den Kosten für unterschiedliche Lösungskonfigurationen, wie sie bei mehrmaliger Durchführung der Schritte 32 bis 35 und unter manueller Änderung des optionalen Parameters arr ermittelt werden. In Schritt 37 trifft der Benutzer eine Auswahl einer Lösungskonfiguration, aus welcher in Schritt 38 automatisch ein Simulationsmodell erzeugt wird.

Im Folgenden werden das verwendete Konfigurationsmodell und die automatische Generierung von Konfigurationen erläutert. Eine ausführliche Beschreibung des Konfigurationsmodells ist in "Modeling configurable Product Families", Juha Tiihonen et al., 4th WDK Workshop on Product Structuring, Oct. 22-23, 1998, Delft University of Technology. Der Inhalt dieser Veröffentlichung wird hiermit in diese Anmeldung aufgenommen.

Figur 4 zeigt eine graphische Darstellung eines stark vereinfachten Konfigurationsmodells einer Schaltanlage, welches im Einklang mit den bisher verwendeten Beispielen steht. Geräte der Schaltanlage werden im Konfigurationsmodell in abstrakter Weise als "Komponenten" betrachtet, wobei der Begriff "Gerät" wie oben beschrieben auch Anordnungen mehrerer einzelner Geräte umfasst. Eine Komponente ist konventionsgemäss rekursiv definiert als aus einem Gerät oder aus einer oder mehreren Komponenten bestehend. Komponenten der Schaltanlage sind zeichnerisch durch Blöcke dargestellt. Gewöhnliche Linien zwischen Blöcken zeigen, dass eine zeichnerisch gesehen obere Komponente eine untere Komponente als Teil aufweist. Eine in rechteckigen Klammern gesetzte Zahl am Ende einer Linie gibt eine Kardinalität dieser Beziehung an, das heisst, eine Anzahl der unteren Komponenten, die die obere Komponente aufweist. Eine mit einem Dreieck versehene Linie zeigt eine "ist ein"-Relation an. Beispielsweise ist eine Komponente "SA", welche eine Schaltanlage repräsentiert, gleich einer Komponente "BS" oder "BPT" oder "BD" oder "AN" oder "DJM". Diese Komponenten repräsentieren unterschiedliche Topologievarianten einer Schaltanlage. Die Komponente "BS" weist nel Komponenten "ET bay", nct Komponenten "CT bay" auf und nib Komponenten "Bus coupl." auf. Die Komponente "Bus coupl." ist eine Komponente "IB" oder eine Komponente "IBSD".

Anforderungen an eine Konfiguration entsprechen Eigenschaften von Beziehungen oder von Komponenten, welche über den Komponenten eingetragen sind. So bedeutet der Ausdruck "U<=138", dass die Komponente "BS" nur für Werte der Nennspannung unter 138 (kV) verwendbar ist.

Zur automatischen Erzeugung aller Konfigurationen, welche den minimalen Anforderungen auf U, nel und nct sowie gegebenenfalls auch optionalen Anforderungen genügen, wird, vom Block "SA" ausgehend, ein durch das Konfigurationsmodell definierter Suchbaum in bekannter Weise mit beispielsweise einer Tiefen- oder Breitensuche erzeugt.

Es seien beispielsweise die minimalen Anforderungen als U=300, nel=3, nct=2 spezifiziert. Dies entspricht einer funktionalen Anforderung, dass Verbindungen zwischen drei Leitungsabgängen und zwei Transformatoren zu schalten sind. Die Komponente "SA" kann nicht eine Komponente "BS" sein, da deren Bedingung U<=138 nicht erfüllt ist. Gleiches gilt für die Komponente "BPT". Die Komponente "SA" kann jedoch eine Komponente "BD" sein. Die Komponente "BD" weist, nach Massgabe der Anforderungen nel und nct, 3 Komponenten "ET bay" und 2 Komponenten "CT bay" auf. Da der Parameter nib respektive sein Wert nicht vorgegeben ist, wird standardmässig nib=0 gesetzt, da sich dadurch die kostengünstigste Lösung ergibt. Falls die Vorgabe von U mehrere Möglichkeiten erlaubt, um die Komponente "SA" zu realisieren, so scheiden die teureren Möglichkeiten aus. Der Anschaffungspreis der Konfiguration berechnet sich beispielsweise als Summe eines Grundpreises der Komponente "BD" und von Preisen der Komponenten "ET bay" und "CT bay", multipliziert mit der jeweiligen Anzahl der Komponente. Ein Flächenbedarf wird beispielsweise durch Addition von Flächenbedarf der Komponenten ermittelt. Zur Bestimmung von Zuverlässigkeitskennwerten existiert eine Vielzahl von Verfahren und Softwarewerkzeugen. Grundlagen sind zum Beispiel zu finden in IEEE Standard 493-1997 oder in J. Endrenyi: Reliability Modeling in Electric Power Systems, John Wiley &Sons, New York 1978.

Verfahren zur Bestimmung von Kennwerten basieren auf zugeordneten Analysemodellen. Ein Analysemodell ist eine softwaremässige Repräsentation eines Verfahrens zur Bestimmung eines Kennwertes einer Konfiguration anhand von Informationen über einzelne Komponenten der Konfiguraton. Die Art der Analysemodelle und dieser Informationen richtet sich nach der Art des zugeordneten Kennwertes. Beispielsweise verarbeitet ein Analysemodell zur Bestimmung von Zuverlässigkeiten respektive Ausfallwahrscheinlichkeiten Parameter wie MTBF ("Mean time between failure") von einzelnen Komponenten sowie Informationen über die Struktur einer bestimmten Konfiguration. Ein Analysemodell zur Bestimmung des Anschaffungspreises ermittelt im Wesentlichen eine Summe von Komponenten- respektive Gerätepreisen. Ein Analysemodell zur Bestimmung eines Regelverhaltens, einer regelungstechnischen Stabilität, einer transienten Stabilität, einer Spannungsstabilität oder einer Schwingungscharakteristik einer Konfiguration weist beispielsweise ein dynamisches Simulationsmodell auf, welches automatisch aus Simulationsmodellen der Komponenten der Konfiguration gebildet wird. Ein Analysemodell zur Bestimmung eines Spannungsverhaltens weist beispielsweise ein Kurzschlussleistungsmodell auf. Ein Analysemodell zur Bestimmung von Kompensationseigenschaften weist beispielsweise ein Lastflussmodell auf.

Die Komponente "SA" kann auch eine Komponente "AN" oder eine Komponente "DJM" sein. Kennwerte werden auch für diese Konfigurationen berechnet. Somit liegen insgesamt drei Konfigurationen mit ihren Kennwerten vor und kann diejenige Konfiguration ermittelt werden, die beispielsweise den niedrigsten Anschaffungspreis aufweist.

Das Konfigurationsmodell weist vorzugsweise sogenannte Randbedingungen auf, welche Parameter verschiedener Komponenten zueinander in Beziehung setzen. Beispielsweise wird durch eine Wahl eines bestimmten Schaltertyps in einem ersten Schaltfeld eine Wahl von Schaltern in weiteren Schaltfeldern auf diesen Typ beschränkt.

Das oben vorgestellte Beispiel ist zur Vereinfachung der Erklärung extrem vereinfacht. Komplexere Konfigurationsmodelle mit mehreren Hierarchiestufen von Komponenten erzeugen viele Konfigurationen. Die automatische Erzeugung von Konfigurationen ist bekannt aus der "Enumerationstheorie" und ist beispielsweise weiterführend beschrieben in "Graphen, Netzwerke und Algorithmen", Dieter Jungnickel, 3. Auflage, Mannheim, Leipzig, Wien, Zürich, Bl-Wissenschafts-Verlag, 1994.

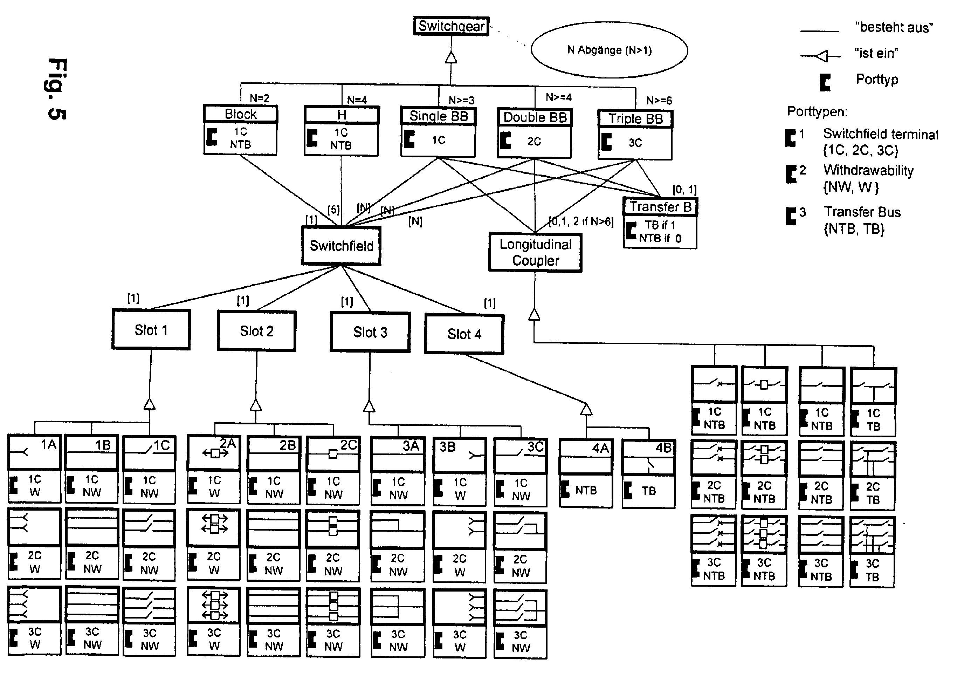

Figur 5 zeigt eine graphische Darstellung eines detaillierten Konfigurationsmodells einer Schaltanlage "Switchgear". Minimale Anforderung ist hier nur eine Anzahl N von Abgängen. Nach Massgabe von N ist eine Auswahl von Topologievarianten respektive Komponenten "Block", "H", "Single BB", "DoubleBB", "Triple BB" eingeschränkt. Die Komponente "Block" besteht aus genau einer Komponente "Switchfield", die Komponente "H" hingegen aus fünf Komponenten "Switchfield". Die Komponente "Single BB" besteht aus N Komponenten "Switchfield", einer oder keiner Komponente "Transfer B" und, nach Massgabe von N, aus einer Komponente "Longitudinal coupler". In jedem Fall besteht die Komponente "Switchfield" aus je genau einer Komponente "Slot 1" bis "Slot 4".

"Slot 1" lässt sich wiederum durch eine von neun verschiedenen Komponenten realisieren, die in Figur 5 teilweise textuell bezeichnet und durch graphische Symbole unterschieden sind. "Slot 2" und "Slot 3" lassen sich jeweils durch eine von jeweils neun anderen Komponenten, "Slot 4" durch eine von zwei weiteren Komponenten realisieren.

Konsistenzbedingungen werden als Eigenschaften von Schnittstellen oder "Ports" zwischen Komponenten formuliert. Es existieren mehrere Schnittstellentypen, und zwischen zwei Komponenten können eine, zwei oder mehrere Schnittstellentypen bestehen. Im vorliegenden Beispiel weist ein erster Schnittstellentyp der Art "Switchfield Terminal" Werte {1C, 2C, 3C} auf, ein zweiter Schnittstellentyp der Art "Withdrawability" Werte {NW, W} und ein dritter Schnittstellentyp der Art "Transfer Bus" Werte {NTB, TB}. In der Figur 5 sind jeweils in einem gezeichneten Block nur die Werte von bestehenden Schnittstellentypen eingetragen; dass eine Schnittstelle vorhanden ist, wird durch den oder die angegebenen Werte impliziert. Eine weitere Bedingung in der Komponente "Transfer B" besagt, dass eine Anzahl [0,1] dieser Komponente gleich eins ist, falls der dritte Schnittstellentyp den Wert "TB" aufweist, und dass die Anzahl Null ist, falls der dritte Schnittstellentyp den Wert "NTB" aufweist.

Eine Konfiguration ist konsistent mit einer Konsistenzbedingung, falls alle Schnittstellentypen aller Komponenten dieselben Werte aufweisen. Komponenten ohne Konsistenzbedingung passen definitionsgemäss zu allen Komponenten.

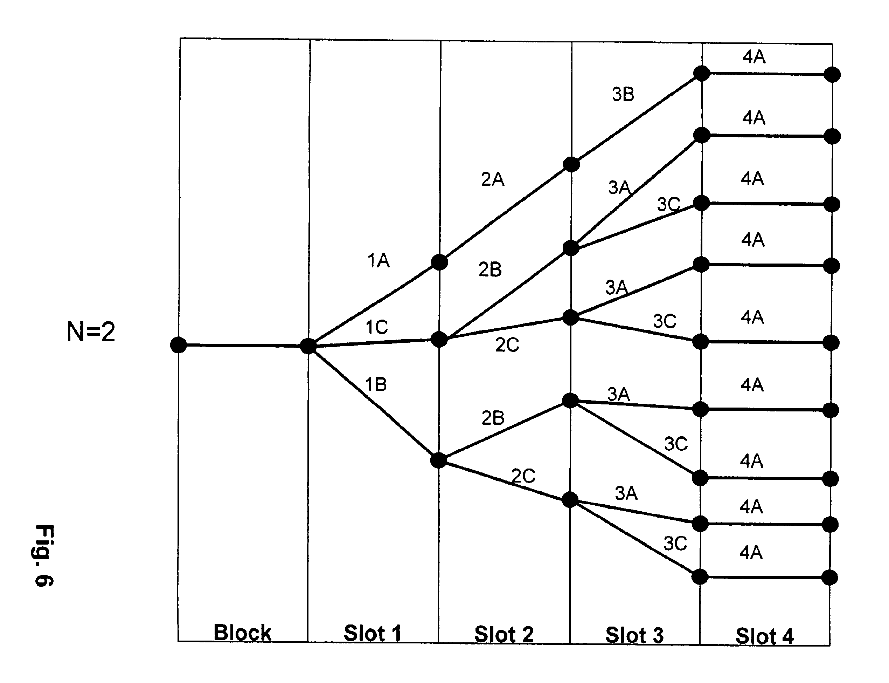

Figur 6 zeigt einen Suchbaum zur Erzeugung von Konfigurationen anhand des Konfigurationsmodells aus Figur 2. Es wird von einer Wahl des minimalen Parameters N=2 ausgegangen. Dadurch ist festgelegt, dass "Switchgear" ein "Block" ist, welcher wiederum genau ein "Switchfield" aufweist. Alle unterschiedlichen Konfigurationen der vier Komponenten von "Switchfield" werden nun systematisch, beginnend mit einer Wahl von Varianten von "Slot 1", erzeugt. Diese Erzeugung könnte, mit gleichem Ergebnis, auch mit einem anderen "Slot" beginnen.

"Slot 1" ist vom Typ "1A" oder "1B" oder "1C". Falls "Slot 1" durch die Komponente "1A" realisiert ist, kann "Slot 2" aufgrund einer Konsistenzbedingung nur vom Typ "2A" realisiert werden, da der erste Schnittstellentyp den Wert "1C" und der zweite Schnittstellentyp den Wert "W" aufweisen muss. Falls "Slot 1" durch die Komponente "1C" realisiert ist, kann "Slot 2" aufgrund einer Konsistenzbedingung nur durch die beiden Komponenten "2B" oder "2C" realisiert werden, da der erste Schnittstellentyp den Wert "1C" und der zweite Schnittstellentyp den Wert "NW" aufweisen muss. In gleicher Weise werden unter Berücksichtigung der Konsistenzbedingungen alle Varianten von "Slot 3" und "Slot 4" geprüft und so der Suchbaum von Figur 6 vervollständigt. Jeder Pfad von der Wurzel des Baums zu einem Blatt beschreibt eine mögliche Konfiguration. Falls N>6 wäre, so wäre der Baum anhand von Varianten der Komponente "Longitudinal Coupler" zu erweitern.

In einer bevorzugten Variante der Erfindung wird nicht jede Konfiguration vollständig erzeugt und werden nicht anschliessend zu jeder vollständigen Konfiguration die Kennwerte bestimmt, sondern werden bei der Erzeugung einer Konfiguration einer oder mehrere Kennwerte laufend nachgeführt. Falls ein Kennwert einen Wert unter- oder überschreitet, den eine andere Konfiguration bereits erreicht hat, wird die Erzeugung einer Konfiguration abgebrochen, und es wird mit der Erzeugung einer nächsten Konfiguration weitergefahren. Beispielsweise wird bei einer Suche nach einer kostenoptimierten Konfiguration eine bisher günstigste Konfiguration gespeichert und wird die Erzeugung einer bestimmten neuen Konfiguration abgebrochen, sobald deren Preis den Preis der bisher günstigsten Konfiguration überschreitet. Dadurch reduziert sich der Speicher- und Rechenaufwand zur Generierung möglicher Konfigurationen.

Eine interne Darstellung eines Konfigurationsmodells geschieht beispielsweise mit einer textuellen Repräsentationssprache. Ausdrücke, die in dieser Sprache geschrieben sind, werden durch eine Datenverarbeitungseinheit gelesen, die daraus Datenstrukturen erstellt, welche das Konfigurationsmodell repräsentieren.

Mit der Lösungskonfiguration ist eine Struktur oder Topologie ihrer elektrischen Verbindungen und sind insbesondere elektrische Eigenschaften und Parameter der Geräte in der Struktur bekannt. Damit liegen alle Informationen vor, die zur Bestimmung eines Simulationsmodells aus Komponentenmodellen der Geräte erforderlich sind. Die automatische Erzeugung eines Simulationsmodells der Lösungskonfiguration anhand dieser Informationen geschieht beispielsweise für oder mit einem bekannten Simulationsprogramm für dynamische Simulation wie Matlab/Simulink™ oder Dymola™.

Zusammengefasst ist das erfindungsgemässe Verfahren zur Konfiguration eines Teils eines elektrischen Energieverteilnetzes, wobei dieser Teil des Energieverteilnetzes durch mehrere unterschiedliche Konfigurationen von Geräten realisierbar ist, **dadurch gekennzeichnet, dass** eine Gesamtheit von möglichen Konfigurationen in einer Datenverarbeitungseinheit durch ein computerlesbares Konfigurationsmodell beschrieben wird, wobei das Verfahren die folgenden Schritte durchführt:
■ Bestimmung einer Menge von funktionalen Anforderungen an eine Konfiguration, beispielsweise nach Massgabe einer Benutzereingabe oder durch ein übergeordnetes Designsystem.
■ Systematische Erzeugung einer Menge aller möglichen Konfigurationen, welche der Menge von funktionalen Anforderungen genügen, wobei jeder möglichen Konfiguration mindestens ein Kennwert zuordnungsbar ist.
■ Automatische Bestimmung einer Lösungskonfiguration, welche einen vorgegebenen Kennwert der Lösungskonfiguration optimiert.

In einer bevorzugten Ausführungsform der Erfindung dient die Netzfunktion, also der betrachtete Teil des Energieverteilnetzes als Knoten des Energieverteilnetzes, das heisst als Schaltanlage, oder als eine Verbindungsleitung oder zur Transformation von Spannungen oder zur Kompensation von Blindleistung oder zur Umformung von Gleich- in Wechselspannung respektive umgekehrt oder zur Filterung von Oberwellen oder zur Steuerung eines Leistungsflusses oder zur Strombegrenzung.

In einer weiteren bevorzugten Ausführungsform der Erfindung geschieht eine Speicherung und Verarbeitung der Modelldaten räumlich verteilt, indem beispielsweise die Modelldatenbank 5 auf einer Speichereinheit bei einem Hersteller gespeichert ist und/oder durch den Hersteller verwaltet und aufdatiert wird, währenddem die Konfiguration, Benutzerinteraktion und eine Verwendung von erzeugten Simulationsmodellen auf einer Datenverarbeitungseinheit eines Netzbetreibers stattfindet. Dies hat den Vorteil, dass der Hersteller die Modelldatenbank modifizieren kann, falls neue oder modifizierte Geräte zur Verfügung stehen. Diese Änderungen werden für den Netzbetreiber als Anwender des erfindungsgemässen Verfahrens automatisch wirksam, ohne dass er sich selber um diese modifizierten Daten der angebotenen Geräte kümmern muss.

In einer anderen bevorzugten Ausführungsform der Erfindung sind Netzfunktionen und somit auch Konfigurationsmodelle hierarchisch organisiert. Dabei ist beispielsweise einem Block in einem ersten, übergeordneten Konfigurationsmodell ein zweites, untergeordnetes Konfigurationsmodell zugeordnet. Parameter und Konsistenzbedingungen werden zwischen den beiden Konfigurationsmodellen ausgetauscht, so dass eine Erzeugung aller möglichen Konfigurationen wie bereits beschrieben durchführbar ist.

Die Hierarchiestufen der Netzfunktionen sind in diese Konfigurationsmodelle einzuordnen. Zum Beispiel befinden sich auf einer obersten Hierarchieebene Netzfunktionen wie "Energie übertragen", "Energie einspeisen" oder "Energie beziehen". Die Netzfunktion "Energie übertragen" weist die Netzfunktionen "Punkt zu Punkt-Verbindung", "Mehrpunktverbindung" oder "Verbindung schalten" auf. Diesen Netzfunktionen wiederum untergeordnet sind beispielsweise die Netzfunktionen "Blindleistung kompensieren", "Stromregelung", "Spannung transformieren", "Leistungsfluss steuern" oder "Strom begrenzen". Funktionen werden durch Funktionsattribute wie zum Beispiel "mit bestimmter Zuverlässigkeit" oder "mit bestimmter Verfügbarkeit" genauer spezifiziert. Eine übergeordnete Netzfunktion wird also aus mehreren untergeordneten Netzfunktionen gebildet. Geschieht dies über mehrere Hierarchiestufen, so wird die übergeordnete Netzfunktion durch einen Baum von Netzfunktionen gebildet.

In einer vorteilhaften Variante dieser Ausführungsform wird bei der Erzeugung von möglichen Konfigurationen im übergeordneten Konfigurationsmodell eine entsprechende Programmfunktion aufgerufen, welche wie oben beschrieben, anhand des untergeordneten Konfigurationsmodells die optimale Konfiguration zur Realisierung der untergeordneten Netzfunktion ermittelt. Durch eine solche lokale Optimierung wird die kombinatorische Explosion der Menge von betrachteten möglichen Konfigurationen stark reduziert.

### Bezugszeichenliste

- 1: Benutzerschnittstelle
- 2: Konfigurator
- 3: Modellgenerator
- 4: Simulator
- 5: Modelldatenbank
- 6: Sammlung von Konfigurationsmodellen für unterschiedliche Netzfunktionen
- 7: Sammlung von Simulationsmodellen von Geräten
- 1: Übermittlung einer Anforderungsspezifikation
- 12: Rückmeldung über optimale Konfigurationen und deren Kennwerte
- 13: Übermittlung eines Konfigurationsmodells
- 14: Übermittlung einer optimalen Konfiguration
- 15: Übermittlung von Simulationsmodellen von Geräten
- 16: Übermittlung eines Simulationsmodells einer Netzfunktion

## Patentansprüche

1. Verfahren zum Konfigurieren eines Teils eines elektrischen Energieverteilnetzes, wobei dieser Teil des Energieverteilnetzes aus mehreren Geräten besteht und durch mehrere unterschiedliche Anordnungen respektive Konfigurationen von Geräten realisierbar ist, und wobei eine Gesamtheit von möglichen Konfigurationen durch ein Konfigurationsmodell beschrieben wird, **dadurch gekennzeichnet, dass** das Verfahren die folgenden Schritte durchführt:
• Bestimmung einer Menge von Anforderungen an eine zu bestimmende Konfiguration,
• systematische Erzeugung aller möglichen Konfigurationen, welche der Menge von Anforderungen genügen, wobei jeder möglichen Konfiguration mindestens ein Kennwert aus der Menge von Kennwerten umfassend
■ Anschaffungskosten der Konfiguration,
■ Platzbedarf der Konfiguration,
■ Zuverlässigkeit der Konfiguration,
■ Risiko der Konfiguration,
■ Wirkungsgrad der Konfiguration, oder
■ Unterhaltskosten der Konfiguration
zugeordnet wird, und
• automatische Bestimmung einer Lösungskonfiguration, welche einen vorgegebenen Kennwert optimiert.

2. Verfahren gemäss Anspruch 1, **dadurch gekennzeichnet, dass** automatisch ein Simulationsmodell zur Simulation eines technischen Verhaltens der Lösungskonfiguration bestimmt wird.

3. Verfahren gemäss Anspruch 1, **dadurch gekennzeichnet, dass** der vorgegebene Kennwert, welcher durch die Lösungskonfiguration optimiert wird, als gewichtete Summe von mehreren Kennwerten aus der Menge von Kennwerten berechnet wird.

4. Verfahren gemäss Anspruch 1, **dadurch gekennzeichnet, dass** das Verfahren zum Konfigurieren des Teils des Energieverteilnetzes als Knoten des Energieverteilnetzes oder als eine Verbindungsleitung oder zur Transformation von Spannungen oder zur Kompensation von Blindleistung oder zur Umformung von Gleich- in Wechselspannung respektive umgekehrt oder zur Filterung von Oberwellen oder zur Steuerung eines Leistungsflusses oder zur Strombegrenzung eingesetzt wird.

5. Verfahren gemäss Anspruch 1, **dadurch gekennzeichnet, dass** der Teil des Energieverteilnetzes durch seine technische Funktion als Netzfunktion beschrieben wird und dass Anforderungen an eine Netzfunktion als funktionale Anforderungen formuliert werden und als Anforderungen an eine zu bestimmende Konfiguration zur Realisierung dieser Netzfunktion verwendet werden.

6. Verfahren gemäss Anspruch 5, **dadurch gekennzeichnet, dass** eine übergeordnete Netzfunktion hierarchisch mehrere untergeordnete Netzfunktionen aufweist.

7. Verfahren gemäss Anspruch 6, **dadurch gekennzeichnet, dass** einer Netzfunktion eine Programmfunktion zugeordnet ist, welche nach Massgabe von Parametern, welche Anforderungen an die Netzfunktion spezifizieren, die Lösungskonfiguration bestimmt, und dass eine übergeordneten Programmfunktion hierarchisch mehrere untergeordnete Programmfunktionen aufruft.

8. Computerprogrammprodukt zum Konfigurieren eines Teils eines elektrischen Energieverteilnetzes, welches in einen internen Speicher einer digitalen Datenverarbeitungseinheit ladbar ist und Computerprogrammcodemittel aufweist, welche, wenn sie in einer digitalen Datenverarbeitungseinheit ausgeführt werden, diese zur Ausführung des Verfahrens gemäss einem der vorangehenden Ansprüche bringen.

9. System zum Konfigurieren eines Teils eines elektrischen Energieverteilnetzes, wobei dieser Teil des Energieverteilnetzes aus mehreren Geräten besteht und durch mehrere unterschiedliche Anordnungen respektive Konfigurationen von Geräten realisierbar ist, und wobei ein Konfigurationsmodell eine Gesamtheit von möglichen Konfigurationen beschreibt, **dadurch gekennzeichnet, dass** das System aufweist
Mittel zur Übermittlung (13) von Konfigurationsmodellen an einen Konfigurator (2), und
Mittel (1) zur Bestimmung einer Menge von Anforderungen an eine zu bestimmende Konfiguration,
wobei der Konfigurator (2) aufweist
• Mittel zur systematischen Erzeugung aller möglichen Konfigurationen, welche der Menge von Anforderungen genügen, wobei jeder möglichen Konfiguration mindestens ein Kennwert aus der Menge von Kennwerten umfassend
■ Anschaffungskosten der Konfiguration,
■ Platzbedarf der Konfiguration,
■ Zuverlässigkeit der Konfiguration,
■ Risiko der Konfiguration,
■ Wirkungsgrad der Konfiguration, oder
■ Unterhaltskosten der Konfiguration
zuordnungsbar ist, und
• Mittel zur automatischen Bestimmung einer Lösungskonfiguration, welche einen vorgegebenen Kennwert optimiert.

10. System gemäss Anspruch 9, **dadurch gekennzeichnet, dass** das System einen Modellgenerator (3) zur automatischen Erzeugung eines Simulationsmodells aus einer Konfiguration aufweist.

## Claims

1. Method for configuration of a part of an electrical power distribution network, in which case this part of the power distribution network comprises a number of appliances and can be implemented by means of a number of different arrangements or configurations of appliances, and in which case a totality of possible configurations is described by a configuration model, **characterized in that** the method carries out the following steps:
• definition of a set of requirements for a configuration to be defined,
• systematic production of all the possible configurations which satisfy the set of requirements, in which case each possible configuration has at least one associated characteristic value from the set of characteristic values comprising
• procurement costs of the configuration,
• space required by the configuration,
• reliability of the configuration,
• risk of the configuration,
• efficiency of the configuration, or
• maintenance costs of the configuration, and
• automatic definition of a solution configuration which optimizes a predetermined characteristic value.

2. Method according to Claim 1, **characterized in that** a simulation model for simulation of a technical response of the solution configuration is defined automatically.

3. Method according to Claim 1, **characterized in that** the predetermined characteristic value which is optimized by the solution configuration is calculated as a weighted sum of a number of characteristic values from the set of characteristic values.

4. Method according to Claim 1, **characterized in that** the method for configuration of the part of the power distribution network is used as a node in the power distribution network, as a connecting line, or for transformation of voltages, for compensation for a wattless component, for conversion of DC voltage to AC voltage or vice versa, for harmonic filtering, for controlling a power flow or for current limiting.

5. Method according to Claim 1, **characterized in that** the part of the power distribution network is described by its technical function as a network function, and **in that** requirements for a network function are formulated as functional requirements and are used as requirements for a configuration to be defined for implementation of this network function.

6. Method according to Claim 5, **characterized in that** a higher-level network function has a number of hierarchically subordinate network functions.

7. Method according to Claim 6, **characterized in that** a network function has an associated program function which defines the solution configuration on the basis of parameters which specify requirements for the network function, and **in that** a higher-level program function calls a number of hierarchically subordinate program functions.

8. Computer program product for configuration of a part of an electrical power distribution network, which can be loaded into an internal memory in a digital data processing unit and has computer program code means which, if they are embodied in a digital data processing unit, cause these to carry out the method according to one of the preceding claims.

9. System for configuration of a part of an electrical power distribution network, in which case this part of the power distribution network comprises a number of appliances and can be implemented by a number of different arrangements or configurations of appliances, and in which case a configuration model describes a totality of possible configurations, **characterized in that** the system has:
means for transmitting (13) configuration models to a configurator (2), and
means (1) for defining a set of requirements for a configuration to be defined,
in which case the configurator (2) has
• means for systematic production of all the possible configurations which satisfy the set of requirements, in which case each possible configuration may have at least one associated characteristic value from the set of characteristic values comprising
• procurement costs of the configuration,
• space required by the configuration,
• reliability of the configuration,
• risk of the configuration,
• efficiency of the configuration, or
• maintenance costs of the configuration, and
• means for automatic definition of a solution configuration which optimizes a predetermined characteristic value.

10. System according to Claim 9, **characterized in that** the system has a model generator (3) for automatic production of a simulation model from one configuration.

## Revendications

1. Procédé pour configurer une partie d'un réseau de distribution d'énergie électrique, cette partie du réseau de distribution d'énergie étant constituée de plusieurs appareils et pouvant être réalisée par plusieurs dispositions ou configurations différentes des appareils et un ensemble de configurations possibles étant décrit par un modèle de configuration, **caractérisé en ce que** le procédé exécute les étapes suivantes :
* détermination d'une pluralité d'exigences imposées à une configuration à déterminer,
* génération systématique de toutes les configurations possibles qui satisfont à la pluralité d'exigences, au moins une valeur caractéristique de la pluralité de valeurs caractéristiques incluant
* le coût d'acquisition de la configuration,
* l'encombrement de la configuration,
* la fiabilité de la configuration,
* le risque de la configuration,
* le rendement de la configuration, ou
* le coût d'entretien de la configuration étant associée à chaque configuration possible, et
* détermination automatique d'une solution de configuration qui optimise une valeur caractéristique prédéfinie.

2. Procédé selon la revendication 1, **caractérisé en ce qu'**un modèle de simulation est déterminé automatiquement pour simuler un comportement technique de la solution de configuration.

3. Procédé selon la revendication 1, **caractérisé en ce que** la valeur caractéristique prédéfinie qui est optimisée par la solution de configuration est calculée en tant que total pondéré de plusieurs valeurs caractéristiques de la pluralité de valeurs caractéristiques.

4. Procédé selon la revendication 1, **caractérisé en ce que** le procédé est utilisé pour configurer la partie du réseau de distribution d'énergie en tant que noeud du réseau de distribution d'énergie ou en tant que ligne de liaison, ou alors pour transformer des tensions, ou pour compenser une puissance réactive, ou pour convertir une tension continue en tension alternative ou inversement, ou pour filtrer des harmoniques, ou pour commander un flux de puissance, ou pour limiter le courant.

5. Procédé selon la revendication 1, **caractérisé en ce que** la partie du réseau de distribution d'énergie est décrite par sa fonction technique en tant que fonction du réseau et que les exigences imposées à une fonction du réseau sont formulées sous la forme d'exigences fonctionnelles et sont utilisées comme exigences imposées à une configuration à déterminer pour réaliser cette fonction du réseau.

6. Procédé selon la revendication 5, **caractérisé en ce qu'**une fonction de réseau supérieure présente plusieurs fonctions de réseau hiérarchiquement inférieures.

7. Procédé selon la revendication 6, **caractérisé en ce qu'**une fonction de programme est associée à une fonction de réseau, laquelle détermine la solution de configuration en fonction de paramètres qui spécifient les exigences imposées à la fonction du réseau et qu'une fonction de programme supérieure invoque plusieurs fonctions de programme hiérarchiquement inférieures.

8. Programme informatique pour configurer une partie d'un réseau de distribution d'énergie électrique, lequel peut être chargé dans une mémoire interne d'une unité de traitement de données numérique et présente des moyens de code de programme informatique qui, lorsqu'ils sont exécutés dans une unité de traitement de données numérique, amènent celle-ci à exécuter le procédé selon l'une des revendications précédentes.

9. Système pour configurer une partie d'un réseau de distribution d'énergie électrique, cette partie du réseau de distribution d'énergie étant constituée de plusieurs appareils et pouvant être réalisée par plusieurs dispositions ou configurations différentes des appareils et un modèle de configuration décrivant un ensemble de configurations possibles, **caractérisé en ce que** le système présente :
des moyens pour communiquer (13) des modèles de configuration à un configurateur (2), et
des moyens (1) pour déterminer une pluralité d'exigences imposées à une configuration à déterminer, le configurateur (2) présentant
* des moyens de génération systématique de toutes les configurations possibles qui satisfont à la pluralité d'exigences, au moins une valeur caractéristique de la pluralité de valeurs caractéristiques incluant,
* le coût d'acquisition de la configuration,
* l'encombrement de la configuration,
* la fiabilité de la configuration,
* le risque de la configuration,
* le rendement de la configuration, ou
* le coût d'entretien de la configuration pouvant être associée à chaque configuration possible, et
* des moyens de détermination automatique d'une solution de configuration qui optimise une valeur caractéristique prédéfinie.
10. Système selon la revendication 9, **caractérisé en ce que** le système présente un générateur de modèle (3) pour générer automatiquement un modèle de simulation à partir d'une configuration.
